# EUROPEAN PATENT APPLICATION

(11) **EP 4 697 131 A1**
(43) Date of publication of application: **18.02.2026**
(21) Application number: 24807517.8
(22) Date of filing: 13.05.2024
(51) Int. Cl.: G06F 1/16, H04R 1/28, H04R 1/02, H04R 7/16

(54) **ELECTRONIC DEVICE COMPRISING SPEAKER UNIT**

(30) Priority: 12.05.2023 KR 20230061708; 16.06.2023 KR 20230077559
(71) Applicant: Samsung Electronics Co., Ltd., Suwon-si, Gyeonggi-do 16677 (KR)
(72) Inventor: SEO, Seonghun, Suwon-si, Gyeonggi-do 16677 (KR); RHEE, Minsu, Suwon-si, Gyeonggi-do 16677 (KR); KIM, Taeeon, Suwon-si, Gyeonggi-do 16677 (KR)
(74) Representative: Gulde & Partner
(86) International application number: PCT/KR2024/006495
(87) International publication number: WO 2024/237646

(57) **Abstract**

An electronic device including a speaker unit is disclosed. The electronic device according to various embodiments of the present invention is an electronic device including a speaker unit. The speaker unit comprises: a speaker core including a vibration plate configured to generate sound by vibrating in a first direction; and a speaker housing including a first plate positioned in the first direction and having an inner space in which the speaker core is positioned. The first plate may include a rigidity reinforcing portion protruding from a surface of the first plate.

## Description

### [Technical Field]

Various embodiments disclosed herein relate to an electronic device and, more particularly, to an electronic device including a speaker unit.

### [Background Art]

An electronic device may include a sound output device configured to output sound, such as a speaker unit. The sound output device may be configured to generate sound through air vibration, for example, as a vibrator driven electromagnetic induction or a piezoelectric element vibrates in response to an electrical signal carrying audio information. The sound reproduced by the electronic device may include a plurality of audio channels, such as stereo sound. In order to improve the sound performance of a speaker, the area of the speaker tends to increase, whereas the thickness of the speaker unit tends to decrease due to the demand for slimming of devices.

The speaker unit may include a speaker housing that accommodates internal components of the speaker. The speaker housing may serve as a component that protects the speaker from physical damage while shielding electromagnetic interference generated by the speaker from the outside.

### [Disclosure of Invention]

### [Solution to Problem]

Due to the demand for an increased area and a decreased thickness of the speaker unit, the surface area of the speaker housing also tends to increase while its thickness tends to decrease. Accordingly, the speaker housing becomes more susceptible to resonance in the audible-frequency band of the vibrations generated by the speaker unit. Because the speaker housing is susceptible to resonance, vibrational sound produced by oscillation of the speaker housing may occur as noise, and the resonance phenomenon may alter the frequency-response characteristics of the speaker and cause sound distortion.

Various embodiments disclosed herein may provide an electronic device that includes a speaker housing in which the resonance phenomenon is reduced to reduce noise and sound distortion.

An electronic device according to various embodiments of the disclosure includes a speaker unit. The speaker unit may include a speaker core including a diaphragm configured to generate sound by vibrating in a first direction, and a speaker housing including an internal space in which the speaker core is positioned and a first plate positioned in the first direction. The first plate may include a rigidity reinforcement portion protruding from a surface of the first plate.

In various embodiments, the rigidity reinforcement portion may be formed by bending the first plate.

In various embodiments, the rigidity reinforcement portion may be positioned to at least partially overlap a central portion of the diaphragm in the first direction.

In various embodiments, the rigidity reinforcement portion may include a first rigidity reinforcement portion and a second rigidity reinforcement portion. The first rigidity reinforcement portion may be positioned at a relatively central portion of the first plate, and the second rigidity reinforcement portion may be positioned at a relatively peripheral portion of the first plate.

In various embodiments, the speaker core may include a diaphragm, and the first rigidity reinforcement portion may be positioned to at least partially overlap a central portion of the diaphragm.

In various embodiments, the first rigidity reinforcement portion may be formed in at least one linear shape on a surface of the first plate.

In various embodiments, the first rigidity reinforcement portion may be formed to have a plurality of the linear shapes extending in respective different directions on a surface of the first plate.

In various embodiments, the second rigidity reinforcement portion may be formed in a linear shape, and the first rigidity reinforcement portion may be formed in a linear shape extending in a different direction from the second rigidity reinforcement portion on a surface of the first plate.

In various embodiments, the first rigidity reinforcement portion and the second rigidity reinforcement portion may be connected to each other on a surface of the first plate.

In various embodiments, the first rigidity reinforcement portion may have a polygonal shape or a circular shape.

A speaker unit according to various embodiments of the disclosure is a speaker unit for an electronic device. The speaker unit may include a speaker core disposed to emit sound in a first direction and a speaker housing including an internal space in which the speaker core is positioned and a first plate positioned in the first direction. The first plate may include a rigidity reinforcement portion protruding from a surface of the first plate.

In various embodiments, the rigidity reinforcement portion may be formed by bending the first plate.

In various embodiments, the speaker core may include a diaphragm, and the rigidity reinforcement portion may be positioned to at least partially overlap a central portion of the diaphragm.

In various embodiments, the rigidity reinforcement portion may include a first rigidity reinforcement portion and a second rigidity reinforcement portion. The first rigidity reinforcement portion may be positioned at a relatively central portion of the first plate, and the second rigidity reinforcement portion may be positioned at a relatively peripheral portion of the first plate.

In various embodiments, the speaker core may include a diaphragm, and the first rigidity reinforcement portion may be positioned to at least partially overlap a central portion of the diaphragm.

In various embodiments, the first rigidity reinforcement portion may be formed in at least one linear shape extending on a surface of the first plate.

In various embodiments, the first rigidity reinforcement portion may be formed to have a plurality of the linear shapes extending in respective different directions on a surface of the first plate.

In various embodiments, the second rigidity reinforcement portion may be formed in a linear shape, and the first rigidity reinforcement portion may be formed in a linear shape extending in a different direction from the second rigidity reinforcement portion on a surface of the first plate.

In various embodiments, the first rigidity reinforcement portion and the second rigidity reinforcement portion may be connected to each other on a surface of the first plate.

In various embodiments, the first rigidity reinforcement portion may have a polygonal shape or a circular shape. According to various embodiments disclosed herein, by reinforcing the rigidity of the first plate of the speaker housing, an electronic device in which vibrational noise and sound distortion caused by resonance of the housing are reduced may be provided.

According to various embodiments disclosed herein, by reinforcing the rigidity of the first plate of the speaker housing, an electronic device in which vibrational noise and sound distortion caused by resonance of the housing are reduced may be provided.

### [Brief Description of Drawings]

With regard to the description of the drawings, the same or like reference signs may be used to designate the same or like elements.
FIG. 1 is a block diagram illustrating an electronic device in a network environment according to various embodiments.
FIG. 2A is a plan view illustrating a speaker unit of an electronic device according to various embodiments of the disclosure.
FIG. 2B is a cross-sectional view illustrating the speaker unit according to various embodiments of the disclosure.
FIG. 3 is a view illustrating a perspective view of a portion of the exemplary electronic device and a cross-sectional view of the display module, according to an embodiment of the disclosure.
FIGS. 4 and 5 are perspective views of a speaker unit according to an embodiment of the disclosure.
FIG. 6 is a cross-sectional view of the speaker unit according to an embodiment of the disclosure.
FIG. 7A is a plan view illustrating a speaker core according to various embodiments of the disclosure.
FIG. 7B is a plan view illustrating a first plate according to various embodiments of the disclosure.
FIG. 7C is a plan view illustrating the first plate and the speaker core according to various embodiments of the disclosure.
FIG. 7D is a schematic view illustrating the speaker unit according to various embodiments of the disclosure.
FIG. 7E is a schematic view illustrating a speaker unit according to a comparative example.
FIGS. 8A to 8F are plan views illustrating the first plate according to various embodiments.
FIGS. 9A to 9D are plan views illustrating the first plate according to various embodiments.
FIG. 10 is a graph illustrating the frequency response in an audible frequency range of a speaker unit according to an embodiment of the disclosure and a speaker unit according to a comparative example.

### [Mode for the Invention]

Hereinafter, exemplary embodiments of the disclosure will be described in detail in conjunction with the accompanying drawings. In the drawings, for example, the sizes and shapes of members may be exaggerated for the sake of descriptive convenience and clarity, and modifications of the illustrated shapes may be expected when actually implemented. Therefore, the embodiment of the disclosure should not be construed to be limited to particular shapes of parts described and shown in the specification.

Throughout the drawings, the same or like reference numerals designate the same or like elements. As used in the specification, the term "and/or" includes any one or all possible combinations of one or more items enumerated together.

Embodiments of the disclosure are provided to more completely explain the disclosure to those skilled in the art to which the disclosure pertains, various changes and modification in form may be made to the embodiments as described below, and the scope of the disclosure is not limited thereto. Instead, the embodiments are provided to make the disclosure more complete and perfect and completely transfer the idea of the disclosure to those skilled in the art.

The terms used in the specification are used to describe embodiments, and are not intended to limit the scope of the disclosure. Although expressed in a singular form, the singular form may include a plural form unless definitely indicated in the context. As used herein, the term "comprise" or "comprising" is intended to specify the existence of mentioned shapes, numbers, steps, operations, elements, components, and/or groups thereof, and does not preclude the possible existence or addition of other shapes, numbers, steps, operations, elements, components, and/or groups thereof. Also, it will be appreciated to those skilled in the art that a structure or shape disposed "adjacent to" any other shape may have a portion overlapping the other shape or disposed under the other shape.

In the specification, relative terms such as "below", "above", "upper", "lower", "horizontal", and "vertical" may be used to describe the relationship between one element, layer, or area and any other element, layer, or area. It should be appreciated that, in addition to the directions illustrated in the drawings, these terms also include other directions.

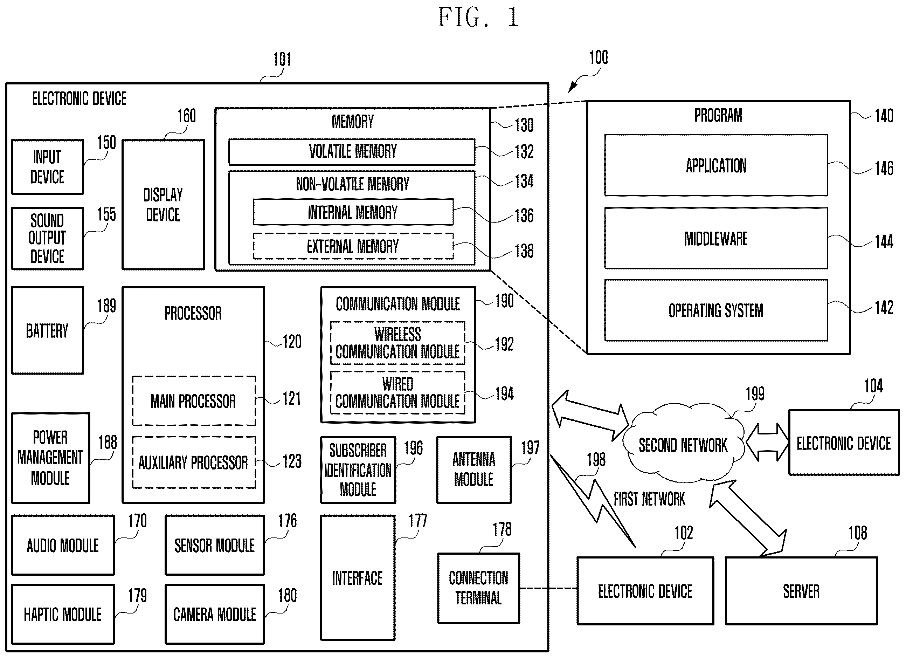

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a multi-layer perceptron (MLP), a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

An electronic device according to various embodiments disclosed herein may be any of various types of devices. The electronic device may include, for example, a portable communication device (e.g., a smartphone), a computer device, a portable multimedia device, a portable medical device, a camera, a wearable device, or a home appliance. The electronic devices according to the embodiments disclosed herein are not limited to the above-described devices.

It is to be understood that various embodiments of the disclosure and terms for describing the embodiments are not intended to limit the technical features disclosed herein to specific embodiments, and that the embodiments include various modifications, equivalents, or substitutions of the corresponding embodiments. In connection with the description made with reference to the drawings, similar or related components may be denoted by similar reference numerals. The singular form of a noun corresponding to an item may include one or more items unless the relevant context clearly indicates otherwise. In the disclosure, each of phrases, such as "A or B," "at least one of A and B," "at least one of A or B," "A, B, or C," "at least one of A, B, and C," and "at least one of A, B, or C" may include any one of the items listed together in the corresponding phrase or all possible combinations of the items. Terms such as "1^{st}," "2^{nd}," "first," and "second" may be used to simply distinguish a given component from other corresponding components and do not limit the corresponding components in other aspects (e.g., importance or order). When a certain (e.g., a first) component is mentioned as being "coupled" or "connected" to another (e.g., a second) component, with or without a term "functionally" or "communicatively," it means that the certain component may be connected to the other component directly (e.g., wiredly), wirelessly, or via a third component.

The term "module" used in various embodiments of the disclosure may include a unit implemented in hardware, software, or firmware, and may be used interchangeably with terms such as "logic," "logic block," "component," "circuit," or the like. The module may be an integrally configured component or a minimum unit or a portion of the component, which performs one or more functions. According to an embodiment, the module may be implemented in the form of an application-specific integrated circuit (ASIC).

Various embodiments disclosed herein may be implemented by software (e.g., the program 140) including one or more instructions stored in a storage medium (e.g., internal memory 136 or external memory 138) readable by a machine (e.g., an electronic device 101). For example, a processor (e.g., the processor 120) of a device (e.g., the electronic device 101) may invoke and execute at least one of the stored one or more instructions from the storage medium. This enables the device to be operated to perform at least one function in response to the at least one invoked instruction. The one or more instructions may include codes generated by a compiler or code capable of being executed by an interpreter. The machine-readable storage medium may be provided in the form of a non-transitory storage medium. Here, the term "non-transitory" merely means that the storage medium is a tangible device and does not contain a signal (e.g., electromagnetic waves), and this term is not intended to distinguish a case where data is permanently stored on the storage medium and a case where data is temporarily stored.

According to an embodiment, a method according to various embodiments disclosed herein may be included and provided in a computer program product. The computer program product may be traded as a product between a seller and a purchaser. The computer program product may be distributed in the form of a machine-readable storage medium (e.g., a compact disc read-only memory (CD-ROM)), or may be directly distributed through an application store (e.g., Play Store^{™}) or directly between two user devices (e.g., smartphones), or may be distributed online (e.g., downloaded or uploaded). In the case of online distribution, at least part of the computer program product may be temporarily stored or produced in a machine-readable storage medium such as a manufacturer's server, a server of an application store, or the memory of a relay server.

According to various embodiments, each of the above-described components (e.g., module or program) may include either a single entity or multiple entities, and some of the multiple entities may be placed separately from other components. According to various embodiments, one or more of the components or operations described above may be omitted, or one or more other components or operations may be added. Alternatively or additionally, multiple components (e.g., modules or programs) may be integrated into a single component. In such a case, the integrated component may perform one or more functions of each of the multiple components in the same or a similar manner as performed by the corresponding one of the multiple components before the integration. According to various embodiments, operations performed by a module, a program, or other components may be executed sequentially, in parallel, repetitively, or heuristically, one or more of the operations may be executed in a different order or omitted, or one or more other operations may be added.

According to various embodiments, a portable electronic device (e.g., the electronic device 101 in FIG. 1) may have a foldable housing divided into two housings about a folding axis. A first portion of a display (e.g., a flexible display) may be disposed on a first housing, and a second portion of the display may be disposed on a second housing. The foldable housing may be implemented as an in-folding type in which the first portion and the second portion face each other when the portable electronic device is folded. Alternatively, the foldable housing may be implemented as an out-folding type in which the first portion and the second portion face away from each other when the portable electronic device is folded. The surface on which the first and second portions of the display are disposed may be defined as a front surface of the portable electronic device, the opposite surface may be defined as a rear surface of the portable electronic device, and the surface surrounding the space between the front and rear surfaces may be defined as the side surface of the portable electronic device.

According to an embodiment disclosed herein, an in-folding case in which, when the display of the portable electronic device is folded, the first portion of the display is disposed on the first housing to face the second portion of the display on the second housing, is illustrated and described by way of an example, but the disclosure is equally applicable to an out-folding case in which, when the display is folded according to an embodiment, the first portion of the display is disposed on the first housing 610 to face away from the second portion of the display on the second housing. In addition, embodiments may be applied to a multi-foldable electronic device in which in-folding and in-folding are combined, in-folding and out-folding are combined, or out-folding and out-folding are combined.

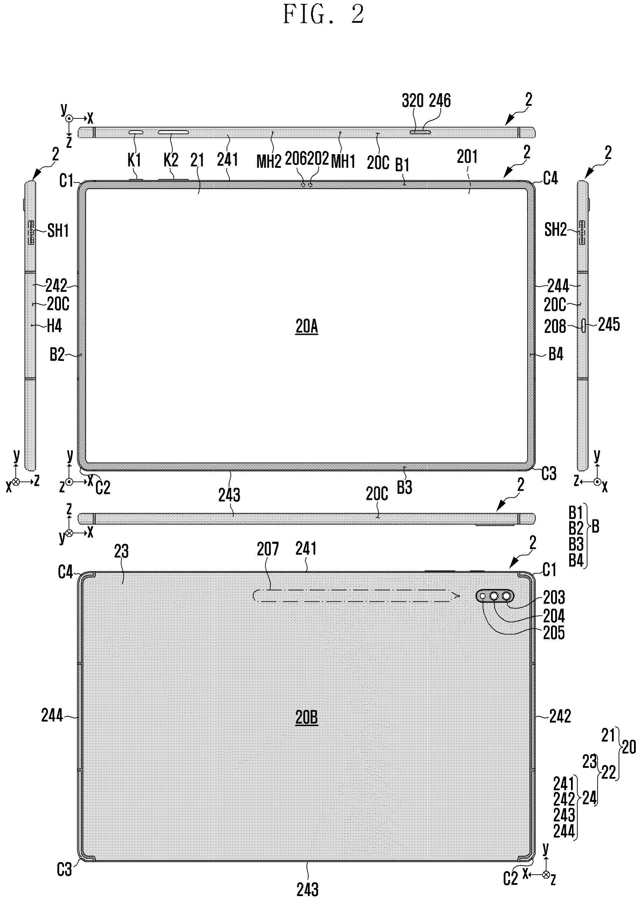

FIG. 2 is a view illustrating various aspects of a second exemplary electronic device 2 according to an embodiment of the disclosure.

In various embodiments of the disclosure, for convenience of description, a surface oriented in a direction in which a display area (or active area or screen area) included in the second exemplary electronic device 2 is visible (e.g., the +z-axis direction) is defined as a front surface 20A of the second exemplary electronic device 2, and a surface oriented in the opposite direction (e.g., the -z-axis direction) is defined as a rear surface 20B of the second exemplary electronic device 2.

Referring to FIG. 2, the second exemplary electronic device 2 may include a housing 20, a display module 201, a first camera module 202, a second camera module 203, a third camera module 204, a light-emitting module 205, a sensor module 206, a first sound input module (not separately illustrated), a second sound input module (not separately illustrated), a third sound input module (not separately illustrated), a first sound output module (not separately illustrated), a second sound output module (not separately illustrated), a key input module, a pen input device 207, a connector (e.g., a first connection terminal) 208, and/or a tray (or adapter) 209. Although not separately illustrated, at least one of the above components may be omitted from the second exemplary electronic device 2 or other components may be additionally included in the second exemplary electronic device 2.

According to various embodiments, the exemplary second electronic device 2 may include the exemplary electronic device 101 of FIG. 1 or may include one or more components among a plurality of components included in the first exemplary electronic device 1.

According to an embodiment, the housing 20 may provide (or form) at least a portion of an exterior of the second exemplary electronic device 2. The housing 20 may, for example, provide (or form) at least a portion of a front surface 20A, a rear surface 20B, and/or a side surface 20C of the second exemplary electronic device 2. In various embodiments, the housing 20 may refer to a structure that provides at least a portion of at least one of the front surface 20A, the rear surface 20B, and the side surface 20C.

According to an embodiment, the housing 20 may include a front surface plate (or front surface cover) 21 and a frame (or case) 22.

According to an embodiment, the front surface plate 21 may provide (or form) at least a portion of the front surface 20A of the second exemplary electronic device 2. At least a portion of the front surface plate 21 may be substantially transparent. The front surface plate 21 may include, for example, a glass plate including various coating layers, or a polymer plate.

According to an embodiment, the frame 22 may provide (or form) at least a portion of the rear surface 20B and the side surface 20C of the second exemplary electronic device 2. The frame 22 may be substantially opaque. The frame 22 may include a metallic material and/or a non-metallic material (e.g., a polymer).

According to an embodiment, the frame 22 may include a rear surface portion 23 and/or a side surface portion 24. The rear surface portion 23 may provide (or form) at least a portion of a rear surface 20B of the second exemplary electronic device 2. The side surface portion 24 (e.g., a side) may provide (or form) at least a portion of a side surface 20C of the second exemplary electronic device 2.

According to an embodiment, the frame 22 may be provided (or formed) as a combination of a metal (or metal structure, conductor, or conductive structure) (not separately illustrated) and a non-metal (or non-metal structure, non-conductor, or non-conductive structure) (not separately illustrated). A portion of the metal may provide a portion of the rear surface portion 23, and another portion of the metal may provide a portion of the side surface portion 24. The metal may, for example, be provided (or formed) as an integrated or single structure (e.g., a single continuous structure or a complete structure). A portion of the non-metal may provide a portion of the rear surface portion 23, and another portion of the non-metal may provide a portion of the side surface portion 24. The non-metal may, for example, be provided (or formed) as an integrated or single structure (e.g., a single continuous structure or a complete structure).

According to various embodiments, although not separately illustrated, a rear surface plate (or rear surface cover) corresponding to the rear surface portion 23 and a side surface member (or side surface bezel, side surface bezel structure, or side) corresponding to the side surface portion 24 may be provided (or formed) in place of the frame 22. The rear surface plate may be substantially opaque and may be formed of, for example, coated or tinted glass, ceramic, polymer, metal (e.g., aluminum, stainless steel, or magnesium), or a combination of at least two of the foregoing materials.

According to an embodiment, the side surface portion 24 may include a first side surface portion (or first side, first side wall, or first side wall portion, first bezel, or first bezel portion) 241, a second side surface portion (or second side, second side wall, second side wall portion, second bezel, or second bezel portion) 242, a third side surface portion (or third side, third side wall, or third side wall portion, third bezel, or third bezel portion) 243, and/or a fourth side surface portion (or fourth side, fourth side wall, or fourth side wall portion, fourth bezel, or fourth bezel portion) 244.

According to an embodiment, when viewed from above the front surface 20A of the second exemplary electronic device 2 (e.g., when viewed in the -z-axis direction), the first side surface portion 241 may be spaced apart from the third side surface portion 243 in a first direction (e.g., the +y-axis direction) and may be substantially parallel to the third side surface portion 243. The first side surface portion 241 may provide (or form) a first side surface that corresponds to the first direction in the side surface 20C of the second exemplary electronic device 2. The third side surface portion 243 may provide (or form) a third side surface that corresponds to a second direction (e.g., the -y-axis direction) opposite to the first direction in the side surface 20C of the second exemplary electronic device 2.

According to an embodiment, the second side surface portion 242 may connect one end of the first side surface portion 241 and one end of the third side surface portion 243. The fourth side surface portion 244 may connect the other end of the first side surface portion 241 and the other end of the third side surface portion 243. When viewed from above the front surface 20A of the second exemplary electronic device 2, the fourth side surface portion 244 may be spaced apart from the second side surface portion 242 in a third direction (e.g., the +x-axis direction) and may be substantially parallel to the second side surface portion 242. The second side surface portion 242 may provide (or form) a second side surface corresponding to a fourth direction (e.g., the -x-axis direction) opposite to the third direction in the side surface 20C of the second exemplary electronic device 2. The fourth side surface portion 244 may provide (or form) a fourth side surface corresponding to the third direction in the side surface 20C of the second exemplary electronic device 2.

According to an embodiment, a first corner C1 where the first side surface portion 241 and the second side surface portion 242 are connected, a second corner C2 where the second side surface portion 242 and the third side surface portion 243 are connected, a third corner C3 where the third side surface portion 243 and the fourth side surface portion 244 are connected, and/or a fourth corner C4 where the first side surface portion 241 and the fourth side surface portion 244 are connected may be implemented as a smooth curve.

According to an embodiment, the display module 201 may be accommodated in the housing 20, and a display area (or active area or screen area) of the display module 201 may be visible (or visually exposed) through the front surface plate 21.

According to an embodiment, the front surface plate 21 may include a bezel area B. The bezel area B may not overlap the display area of the display module 201 when viewed from above the front surface 20A of the second exemplary electronic device 2. The bezel area B may be provided (or formed) in a shape that surrounds the display area (e.g., a rectangular annular shape) when viewed from above the front surface 20A. The bezel area B may be substantially opaque. The bezel area B may be provided (or formed), for example, by an opaque material that is coated or tinted on the front surface plate 21. The bezel area B may include a first bezel area B1, a second bezel area B2, a third bezel area B3, and/or a fourth bezel area B4. The first bezel area B1 may be positioned adjacent to and corresponding to the first side surface portion 241. The second bezel area B2 may be positioned adjacent to and corresponding to the second side surface portion 242. The third bezel area B3 may be positioned adjacent to and corresponding to the third side surface portion 243. The fourth bezel area B4 may be positioned adjacent to and corresponding to the fourth side surface portion 244.

According to an embodiment, the first camera module 202, the second camera module 203, and/or the third camera module 204 may include one or more lenses, one or more image sensors, and/or an image signal processor (ISP).

According to an embodiment, the first camera module 202 may be accommodated in the housing 20 corresponding to the front surface 20A of the second exemplary electronic device 2. External light may pass through the front surface plate 21 and reach the first camera module 202. The first camera module 202 may be defined or interpreted as a "front camera module."

According to an embodiment, the first camera module 202 may be accommodated in the housing 20 corresponding to the first bezel area B of the front surface plate 21. The front surface plate 21 may include a first transparent area (or first light-transmissive area) positioned in the first bezel area B. External light may pass through the first transparent area and reach the first camera module 202.

According to various embodiments, although not separately illustrated, the display area of the display module 201 may be implemented to be as large as possible, and the bezel area B may be reduced or substantially omitted, unlike the illustrated example. The first camera module 202 may overlap the display area of the display module 201 when viewed from above the front surface 20A of the second exemplary electronic device 2. The first camera module 202 may be positioned on the rear surface of or beneath the display area. When viewed from the outside of the second exemplary electronic device 2, the first camera module 202, or the position of the first camera module 202, may not be visually distinguishable (or may not be visible). The first camera module 202 may include, for example, a hidden display rear camera (e.g., an under-display camera (UDC)). External light may pass through the front surface plate 21 and the display area and reach the first camera module 202.

According to various embodiments, when the first camera module 202 is implemented as a hidden display rear camera of the display, the first camera module 202 may be aligned with an opening (not separately illustrated) provided in the display area of the display module 201 or may be at least partially inserted into the opening. External light may pass through the front surface plate 21 and the opening in the display area and reach the first camera module 202. The opening in the display area that is aligned with or overlaps the first camera module 202 may be provided in the form of a hole. In various embodiments, when viewed from above the front surface 20A of the second exemplary electronic device 2, the opening in the display area that is aligned with or overlaps the first camera module 202 may be provided as a notch (not separately illustrated).

According to various embodiments, when the first camera module 202 is implemented as a hidden display rear camera, the first camera module 202 may be aligned with a recess (not separately illustrated) provided on the rear surface of the display area or may be at least partially inserted into the recess.

According to various embodiments, although not separately illustrated, when the first camera module 202 is implemented as a hidden display rear camera, a partial area of the display area of the display module 201 that at least partially overlaps the first camera module 202 may include a different pixel structure and/or wiring structure compared to other areas. The pixel structure and/or the wiring structure provided in the portion of the display area that at least partially overlaps the first camera module 202 may be implemented to reduce light loss between the outside of the second exemplary electronic device 2 and the first camera module 202. The portion of the display area that at least partially overlaps the first camera module 202 may have, for example, a different pixel density (e.g., the number of pixels per unit area) from other partial areas. For example, the portion of the display area that at least partially overlaps the first camera module 202 may not substantially include a plurality of pixels.

According to an embodiment, the second camera module 203 and the third camera module 204 may be provided corresponding to the rear surface 20B of the second exemplary electronic device 2. According to an embodiment, the second camera module 203 may be defined or interpreted as a "first rear camera module," and the third camera module 204 may be defined or interpreted as a "second rear camera module." Although not separately illustrated, the positions or number of rear camera modules including the second camera module 203 and the third camera module 204 are not limited to the illustrated example and may vary.

According to an embodiment, the second camera module 203 may be positioned corresponding to a first camera hole provided (or formed) in the rear surface portion 23 of the frame 22 and may be visible from outside the second exemplary electronic device 2 through the first camera hole. The third camera module 204 may be positioned corresponding to a second camera hole provided (or formed) in the rear surface portion 23 of the frame 22 and may be visible from outside the second exemplary electronic device 2 through the second camera hole. In various embodiments, the rear surface portion 23 of the frame 22 may include a first light-transmissive area in place of the first camera hole and/or a second light-transmissive area in place of the second camera hole.

According to various embodiments, the second camera module 203 and/or the third camera module 204 may include a wide-angle camera module, a telephoto camera module, a color camera module, a monochrome camera module, or an IR camera module (e.g., a time-of-flight (TOF) camera or a structured light camera).

According to an embodiment, the second camera module 203 and/or the third camera module 204 may have different attributes (e.g., an angle of view) or functions.

According to various embodiments, the second camera module 203, and/or the third camera module 204 may provide different angles of view (or lenses with different angles of view). The second exemplary electronic device 2 may selectively use the angle of view of the second camera module 203 and/or the third camera module 204 based on a user's selection related to the angle of view.

According to an embodiment, the light-emitting module 205 may be provided corresponding to the rear surface 20B of the second exemplary electronic device 2. The light-emitting module 205 may be positioned corresponding to a flash hole or a light-transmissive area provided (or formed) in the rear surface portion 23 of the frame 22. The light-emitting module 205 may include a light source for the second camera module 203 and/or the third camera module 204. The light-emitting module 205 may include an LED, an IR LED, or a xenon lamp, but is not limited thereto.

According to various embodiments, the second exemplary electronic device 2 may include another light-emitting module (e.g., an LED, an IR LED, or a xenon lamp) (not separately illustrated) accommodated in the housing 20 corresponding to the front surface 20A of the second exemplary electronic device 2. The other light-emitting module may provide state information of the second exemplary electronic device 2 in the form of light and/or provide a light source interlocked with the operation of the first camera module 202.

According to an embodiment, the sensor module 206 may be accommodated in the housing 20 corresponding to the front surface 20A of the second exemplary electronic device 2. The sensor module 206 may include, for example, an optical sensor (e.g., a proximity sensor or an ambient light sensor).

According to an embodiment, the sensor module 206 may be accommodated in the housing 20 corresponding to the first bezel area B of the front surface plate 21. The front surface plate 21 may include a second transparent area (or second light-transmissive area) positioned in the first bezel area B. External light may pass through the second transparent area and reach the sensor module 206.

According to various embodiments, in at least partially identically or similar manner as in the example in which the first camera module 202 overlaps the display area of the display module 201, the sensor module 206 may overlap the display area when viewed from above the front surface 20A of the second exemplary electronic device 2. The sensor module 206 may be positioned on the rear surface of the display area or beneath the display area. When viewed from the outside of the second exemplary electronic device 2, the sensor module 206 or the position of the sensor module 206 may be substantially invisible or may not be visually distinguishable.

According to various embodiments, the second exemplary electronic device 2 may include one or more other sensor modules (not separately illustrated) provided at various other positions. For example, the second exemplary electronic device 2 may include a biometric sensor module of an optical type, capacitive type, or ultrasonic type (e.g., a fingerprint recognition sensor module). For example, in at least partially identically or similar manner as in the example in which the first camera module 202 overlaps the display area of the display module 201, the biometric sensor module may overlap the display area when viewed from above the front surface 20A of the second exemplary electronic device 2.

According to an embodiment, the first sound input module (not separately illustrated) may include a first microphone. The first microphone may, for example, be accommodated in the housing 20 corresponding to a first microphone hole (or first hole) MH1 provided (or formed) in the first side surface portion 241. The second sound input module (not separately illustrated) may include a second microphone. The second microphone may, for example, be accommodated in the housing 20 corresponding to a second microphone hole (or second hole) MH2 provided (or formed) in the first side surface portion 241. The third sound input module (not separately illustrated) may include a third microphone (or third mic). The third microphone may, for example, be accommodated in the housing 20 corresponding to a third microphone hole (or third hole) MH3 provided (or formed) in the first side surface portion 241. Although not separately illustrated, the positions or numbers of microphones and microphone holes corresponding to the microphones may vary without being limited to the illustrated example.

According to an embodiment, the second exemplary electronic device 2 may perform noise cancelling through one or more microphones.

According to an embodiment, the second exemplary electronic device 2 may be configured to detect the direction of sound outside the second exemplary electronic device 2 using a plurality of microphones.

According to an embodiment, the first sound output module (not separately illustrated) may include a first speaker. The first speaker may, for example, be accommodated in the housing 20 corresponding to a first speaker hole (or fifth hole) SP1 provided (or formed) in the second side surface portion 242. The second sound output module (not separately illustrated) may include a second speaker. The second speaker may, for example, be accommodated in the housing 20 corresponding to a second speaker hole (or sixth hole) SP2 provided (or formed) in the fourth side surface portion 244. Although not separately illustrated, the positions or number of speakers and speaker holes corresponding thereto may vary.

According to various embodiments, the first sound output module may include a first piezo speaker, and the first speaker hole SH1 may be omitted. The second sound output module may include a second piezo speaker, and the second speaker hole SH2 may be omitted.

According to various embodiments, a single hole (not separately illustrated) that replaces at least one of the first microphone hole MH1, the second microphone hole MH2, the third microphone hole MH3, and the fourth microphone hole MH4 and at least one of the first speaker hole SH1 and the second speaker hole SH2 may be provided (or formed) in the side surface portion 24 of the frame 22.

According to an embodiment, the key input module may include a first key (e.g., a first side key) K1, a second key (e.g., a second side key) K2, and/or a key signal generator (or a key signal generation circuit) (not separately illustrated). For example, the first key K1 may be positioned in a first key hole provided (or formed) in the first side surface portion 241 of the frame 22, and the second key K2 may be positioned in a second key hole provided (or formed) in the first side surface portion 241 of the frame 22. The key signal generator may be accommodated in the housing 20. The key signal generator may generate a first key signal corresponding to a press or touch on the first key K1 and a second key signal corresponding to a press or touch on the second key K2. The positions or number of key input modules may vary without being limited to the illustrated example.

According to an embodiment, the pen input device 207 (e.g., a stylus pen) may be attachable to and detachable from the housing 20. The pen input device 207 may be attachable to and detachable from, for example, the rear surface 20B of the second exemplary electronic device 2. The pen input device 207 may be attachable to and detachable from, for example, the side surface 20C or the front surface 20A of the second exemplary electronic device 2. The pen input device 207 may be attached to the housing 20 through an attractive force between magnetic elements. However, the attachment is not limited thereto and the pen input device 207 may be disposed in the housing 20 in various other ways, such as being inserted into the interior of the housing 20.

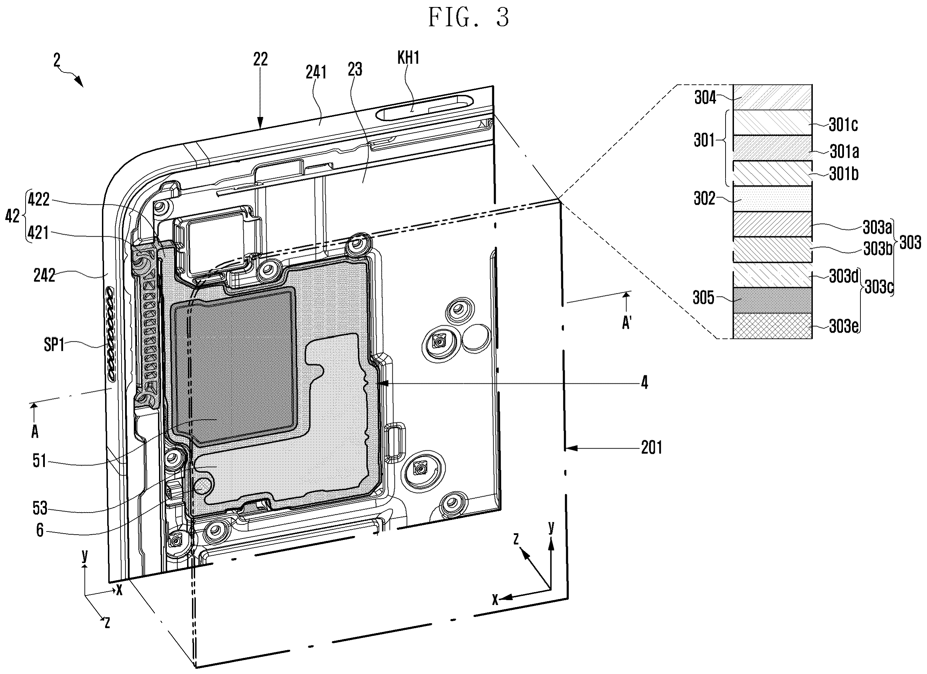

According to an embodiment, the pen input device 207 may be implemented in an electromagnetic induction type (e.g., an electro-magnetic resonance (EMR) type). The pen input device 207 may include a resonance circuit and may be implemented to interact with an electromagnetic induction panel (e.g., the electromagnetic induction panel 305 of FIG. 3) included in the second exemplary electronic device 2.

According to an embodiment, the connector 208 may be accommodated in the housing 20 corresponding to a connector hole 245 provided (or formed) in the side surface portion 24 of the frame 22. The connector hole 245 may be positioned in, for example, the fourth side surface portion 244. The second exemplary electronic device 2 may transmit and/or receive power and/or data to and/or from an external electronic device (e.g., the external electronic device 102 or 104 of FIG. 1) that is electrically connected to the connector 208. The connector 208 may include, for example, a USB connector or an HDMI connector. The positions or number of connector holes 245 and corresponding connectors 208 are not limited to the illustrated example and may vary.

According to an embodiment, the tray 209 may be inserted into a socket (e.g., a second connection terminal) (not separately illustrated) through a tray hole 246 provided (or formed) in the side surface portion 24 of the frame 22. The tray 209 may connect an external storage medium (not separately illustrated) to the socket. The external storage medium may be attachable to and detachable from the tray 209. When the tray 209 in which the external storage medium is disposed is inserted into the socket through the tray hole 246, the external storage medium may be electrically connected to the socket. The tray 209 may be referred to by various other terms such as an "external storage medium tray" (e.g., a SIM tray or SIM card tray), an "external storage medium support" (e.g., a SIM support or SIM card support), an "external storage medium support member" (e.g., a SIM support member or SIM card support member), or an "external storage medium holder." The external storage medium may include, for example, a SIM card or a universal subscriber identity module (USIM) card. The external storage medium may include, for example, a memory card such as a compact flash (CF), a multi-media card (MMC), a smart media card (SMC), a secure disk (SD), or a memory stick (MS). The combination of the socket and the tray 209 may be for a single external storage medium. However, it is not limited thereto and, although not separately illustrated, may be implemented for multiple external storage media (e.g., two or three external storage media).

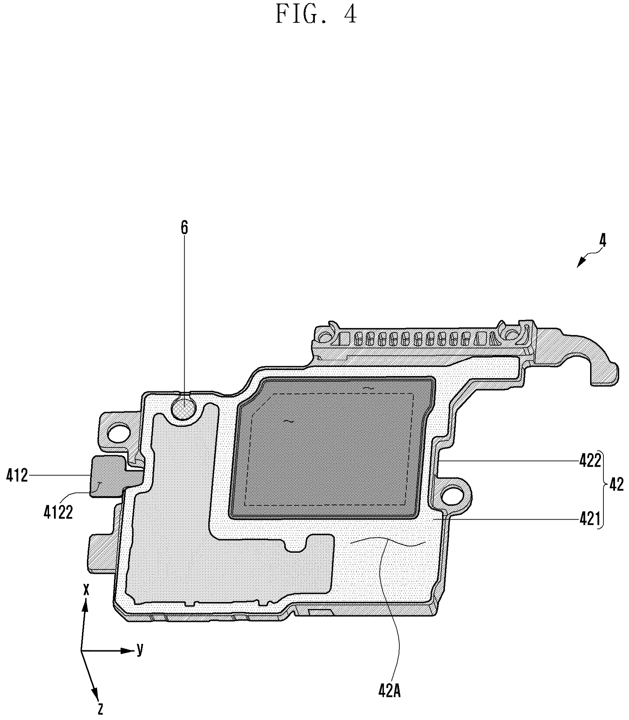

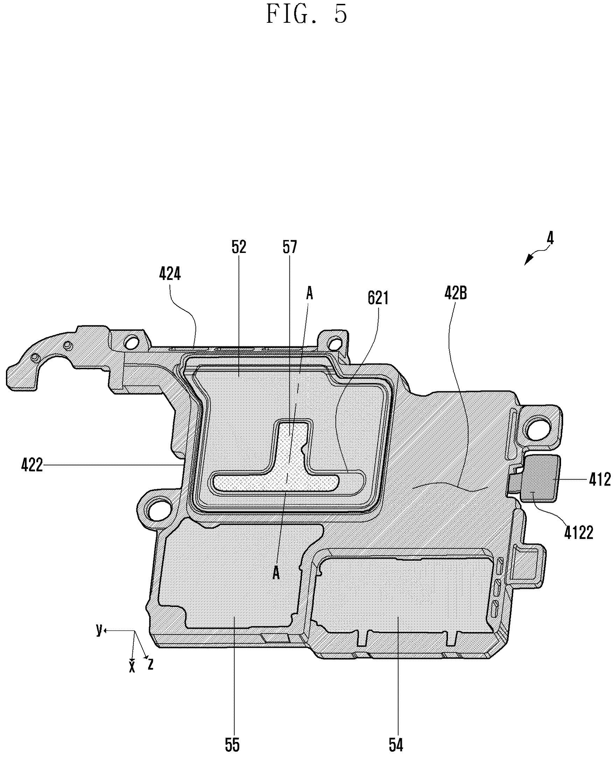

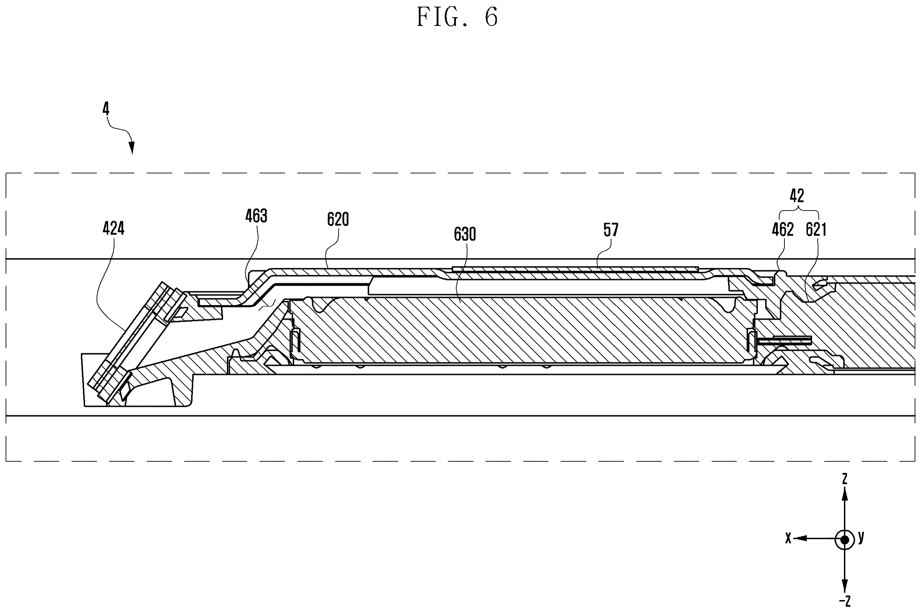

FIG. 3 is a view illustrating a perspective view of a portion of the second exemplary electronic device 2 and a cross-sectional view of the display module 201 according to an embodiment of the disclosure. FIGS. 4 and 5 are perspective views illustrating a speaker assembly 4 according to an embodiment of the disclosure. FIG. 6 is a cross-sectional view of the speaker assembly 4 according to an embodiment of the disclosure. The cross section of FIG. 6 is a section taken along the A-A direction of FIG. 5.

Referring to FIGS. 3, 4, 5, and 6, the second exemplary electronic device 2 may include a front surface plate 21, a frame 22, the display module 201, and/or the speaker assembly 4. Descriptions of at least one same component among the plurality of components illustrated in FIG. 3 that have already been described with reference to FIG. 2 will be omitted.

According to an embodiment, the frame 22 may include a first speaker hole SP1 provided (or formed) in the second side surface portion 242. The first speaker hole SP1 may include, for example, a plurality of holes. The plurality of holes included in the first speaker hole SP1 may be arranged, for example, in a first direction (e.g., the +y-axis direction).

According to an embodiment, the frame 22 may include a first key hole KH1 provided (or formed) in the first side surface portion 241. A first key K1 (see FIG. 2) may be positioned in the first key hole KH1.

According to an embodiment, the display module 201 may be positioned in a space between the front surface plate 21 and the frame 22. The display module 201 may be coupled to the front surface plate 21 through an optically clear adhesive layer (or optically transparent adhesive layer) (not separately illustrated). The optically clear adhesive layer may include, for example, an optically transparent adhesive material such as an optical clear adhesive (OCA), an optical clear resin (OCR), or a super view resin (SVR).

According to an embodiment, the display module 201 may include a display panel 301, a base film 302, a lower panel 303, an optical layer 304, and/or an electromagnetic induction panel 305.

According to an embodiment, the display panel 301 may be positioned between the optical layer 304 and the base film 302. The base film 302 may be positioned between the display panel 301 and the lower panel 303. The optical layer 304 may be positioned between the optically clear adhesive layer and the display panel 301. Various polymer adhesive layers (or bonding layers) (not separately illustrated) may be disposed between the display panel 301 and the base film 302, between the base film 302 and the lower panel 303, and/or between the optical layer 304 and the display panel 301.

According to an embodiment, the display panel 301 may include a light-emitting layer 301a, a thin film transistor (TFT) film 301b, and/or an encapsulation (e.g., a thin-film encapsulation (TFE)) 301c. The light-emitting layer 301a may include, for example, a plurality of pixels implemented by light-emitting elements such as organic light-emitting diodes (OLEDs) or micro-LEDs. The light-emitting layer 301a may be disposed on the TFT film 301b through organic material evaporation. The TFT film 301b may be positioned between the light-emitting layer 301a and the base film 302. The TFT film 301b may refer to a film structure in which at least one TFT is disposed on a flexible substrate (e.g., a PI film) through a series of processes such as deposition, patterning, and/or etching. At least one TFT may control a current supplied to the light-emitting elements of the light-emitting layer 301a to turn on or off the pixels or to adjust the brightness of the pixels. The at least one TFT may be implemented as, for example, an amorphous silicon (a-Si) TFT, a liquid crystalline polymer (LCP) TFT, a low-temperature polycrystalline oxide (LTPO) TFT, or a low-temperature polycrystalline silicon (LTPS) TFT.

According to an embodiment, the display panel 301 may include a storage capacitor, and the storage capacitor may maintain a voltage signal applied to the pixels, may maintain the voltage applied to the pixels within one frame, or may suppress a change in the gate voltage of the TFT due to leakage current during a light-emitting period of time. By a routine for controlling the at least one TFT (e.g., initialization or data write), the storage capacitor may maintain the voltage applied to the pixels at regular time intervals.

According to an embodiment, the display panel 301 may be implemented based on OLEDs, and the encapsulation 301c may cover the light-emitting layer 301a. The organic materials and electrodes that emit light in the OLEDs may react very sensitively to oxygen and/or moisture and may lose light-emitting properties thereof. Thus, in order to reduce or prevent this phenomenon, the encapsulation 301c may seal the light-emitting layer 301a to prevent oxygen and/or moisture from penetrating into the OLEDs. The encapsulation 301c may serve as a pixel protection layer for protecting the plurality of pixels of the light-emitting layer 301a.

According to an embodiment, the base film 302 may serve to support and protect the display panel 301. According to an embodiment, when the display module 201 is implemented to be substantially rigid, the base film 302 may include a substantially rigid film (or substrate) (e.g., a glass substrate). When the display module 201 is implemented to be flexible, the base film 302 may include a flexible film (or substrate) formed of a polymer or plastic such as polyimide or polyester (PET). The base film 302 may be referred to as a "protective film," a "back film," or a "back plate."

According to an embodiment, the lower panel 303 may include a plurality of layers for various functions. Various polymer adhesive layers (or bonding layers) (not separately illustrated) may be disposed between the layers included in the lower panel 303. The lower panel 303 may include, for example, a light-blocking layer 303a, a buffer layer 303b, and/or a lower layer 303c. The light-blocking layer 303a may be positioned between the base film 302 and the buffer layer 303b. The buffer layer 303b may be positioned between the light-blocking layer 303a and the lower layer 303c. The light-blocking layer 303a may block at least a portion of light incident from the outside. The light-blocking layer 303a may include, for example, an embossed layer. The embossed layer may be, for example, a black layer including an irregular pattern. The buffer layer 303b may alleviate, for example, external impacts applied to the display module 201. The buffer layer 303b may include, for example, a sponge layer or a cushion layer. The lower layer 303c may diffuse, disperse, or dissipate heat generated in the second exemplary electronic device 2 or the display module 201. The lower layer 303c may absorb or shield electromagnetic waves. The lower layer 303c may alleviate external impacts applied to the second exemplary electronic device 2 or the display module 201.

According to an embodiment, the lower layer 303c may include a composite sheet 303d or a copper sheet 303e. The composite sheet 303d may be a sheet obtained by combining layers or sheets having different properties. For example, the composite sheet 303d may include at least one of polyimide or graphite. The composite sheet 303d may also be replaced with a single sheet including a single material (e.g., polyimide or graphite). The composite sheet 303d may be positioned between the buffer layer 303b and the copper sheet 303e. The copper sheet 303e may be replaced with various other metal sheets.

According to various embodiments, at least a portion of the lower layer 303c may include a conductive member (e.g., a metal plate). The conductive member of the lower layer 303c may assist in reinforcing the rigidity of the slider-type electronic device 2. The conductive member of the lower layer 303c may shield ambient noise. The conductive member of the lower layer 303c may be used to disperse heat emitted from surrounding heat-emitting components (e.g., a display drive integrated circuit (DDI)). The conductive member of the lower layer 303c may include, for example, at least one of copper (Cu), aluminum (Al), stainless steel (SUS), or a clad material (e.g., a laminated member in which SUS and Al are alternately arranged).

According to various embodiments, the lower layer 303c may include various layers (not separately illustrated) for various other functions. In various embodiments, at least one additional polymer layer (e.g., a layer including PI, PET, or TPU) (not separately illustrated) may be further disposed on the rear surface of the display panel 301, in addition to the base film 302.

According to various embodiments, at least one of the plurality of layers (e.g., the light-blocking layer 303a, the buffer layer 303b, the composite sheet 303d, and the copper sheet 303e) included in the lower panel 303 may be omitted.

According to various embodiments, the disposed order of the plurality of layers included in the lower panel 3033 is not limited to the illustrated embodiment and may be variously changed.

According to an embodiment, the optical layer 304 may include, for example, a polarizing layer (or polarizer) or a retardation layer (or retarder). An optically clear adhesive layer (not separately illustrated) may be disposed between the front surface plate 21 and the optical layer 304. The polarizing layer and the phase retardation layer may improve outdoor visibility of the screen. For example, the optical layer 304 may selectively allow light that is emitted from a light source of the display panel 301 and oscillates in a predetermined direction to pass therethrough. In various embodiments, the polarizing layer and the retardation layer may be combined and provided as a single layer, and such a layer may be interpreted as a "circular polarizing layer."

According to various embodiments, the polarizing layer (or circularly polarizing layer) may be omitted, and in this case, a black pixel define layer (PDL) and/or a color filter may be provided in place of the polarizing layer.

According to an embodiment, the second exemplary electronic device 2 may include a touch sensing circuit (e.g., a touch sensor) (not separately illustrated). The touch sensing circuit may be implemented as a transparent conductive layer (or film) based on various conductive materials such as indium tin oxide (ITO). The touch sensing circuit may be disposed, for example, between the transparent cover 305 and the optical layer 304, as an add-on type. According to an embodiment, the touch sensing circuit may be disposed between the optical layer 304 and the display panel 301, for example, as an on-cell type. For example, the display panel 301 may include a touch sensing circuit or a touch sensing function, as an in-cell type.

According to an embodiment, the display panel 301 may be based on OLED, and an encapsulation 301c of the display panel 301 may be disposed between the light-emitting layer 301a and the optical layer 304. For example, the display module 201 may include a conductive pattern (not separately illustrated), such as a metal mesh (e.g., an aluminum metal mesh), as a touch sensing circuit disposed on the encapsulation 301c, between the encapsulation 301c and the optical layer 304. The metal mesh may have greater durability than a transparent conductive layer implemented with ITO in response to bending of the display module 201.

According to an embodiment, the electromagnetic induction panel 305 may be disposed between the composite sheet 303d and the copper sheet 303e of the lower layer 303c.

According to various embodiments, the electromagnetic induction panel 305 may be disposed between the buffer layer 303b and the lower layer 303c.

According to various embodiments, the electromagnetic induction panel 305 may be disposed between the light-blocking layer 303a and the buffer layer 303b.

According to an embodiment, the electromagnetic induction panel 305 may be implemented in the form of a flexible film or sheet. The electromagnetic induction panel 305 may be implemented, for example, as a flexible printed circuit board (not separately illustrated).

According to an embodiment, the electromagnetic induction panel 305 may include a plurality of electrode patterns. When an alternating current is supplied to the electromagnetic induction panel 305, an electromagnetic field may be formed by the plurality of electrode patterns. When a pen tip of a pen input device 207 (see FIG. 2) approaches the front surface 20A (see FIG. 2) of the second exemplary electronic device 2, a current may be induced in a coil included in the pen input device 207 by electromagnetic induction. The pen input device 207 may generate a signal (e.g., a radio frequency signal) related to user input (e.g., a position signal, a pressure signal, and/or an angle signal) using energy supplied from the electromagnetic induction panel 305, and may transmit the signal to the electromagnetic induction panel 305.

According to an embodiment, the electromagnetic induction panel 305 may include a shielding sheet (not separately illustrated). The electromagnetic induction panel 305 may be positioned on a rear surface of a flexible printed circuit board (not separately illustrated) that includes a plurality of electrode patterns (e.g., a surface facing the copper sheet 303e). The shielding sheet may reduce or prevent electromagnetic influence of an electrical component included in the second exemplary electronic device 2 on the electromagnetic induction panel 305. According to an embodiment, the shielding sheet may reduce or block an influence of an electromagnetic field generated from an electrical component included in the second exemplary electronic device 2 on the electromagnetic induction panel 305, so as to reduce or prevent a loss or distortion of an input transmitted from the pen input device 207 (see FIG. 2) to the electromagnetic induction panel 305.

The electromagnetic induction panel (e.g., a digitizer) (not separately illustrated) may be configured to detect a magnetic-field-based pen input device (e.g., an electronic pen or a stylus pen).

According to various embodiments, although not separately illustrated, a plurality of layers included in the display module 201, a laminated structure thereof, or a stacking order thereof may vary. Although not separately illustrated, the display module 201 may be implemented by omitting some components or adding other components depending on a provided form or a convergence trend.

According to an embodiment, the speaker unit 4 may be positioned in a space between the front surface plate 21 and the frame 22. The speaker unit 4 may be disposed or coupled to the frame 22.

According to various embodiments, the second exemplary electronic device 2 may include an internal support (or support member, support structure, or support portion) (e.g., a bracket) (not separately illustrated) that is at least partially positioned between the rear surface portion 23 of the frame 22 and the display module 201. The internal support may be connected to the rear surface portion 23 and/or the side surface portion 24 of the frame 22. Some of the plurality of electrical components included in the second exemplary electronic device 2 (e.g., the display module 201) may be disposed on or coupled to the internal support or supported by the internal support between the front surface plate 21 and the internal support. Other ones of the plurality of electrical components included in the second exemplary electronic device 2 (e.g., a printed circuit board) may be disposed on, coupled to, or supported by the internal support between the rear surface portion 23 of the frame 22 and the internal support. The speaker unit 4 may be disposed on or coupled to, for example, the internal support between the display module 201 and the internal support. The internal support may include at least one conductive portion and/or at least one non-conductive portion. The internal support may be provided (or formed) as, for example, a combination of at least one conductive portion and at least one non-conductive portion. In various embodiments, the internal support may be interpreted as a portion of the frame 22.

According to an embodiment, at least a portion of the speaker unit 4 may be positioned between the display module 201 and the rear surface portion 23 of the frame 22.

According to an embodiment, the speaker unit 4 may include a speaker core 630, a speaker housing 42, a first plate 620, and/or a first air-permeable member (or first air-permeable material) 6. According to an embodiment, the speaker unit 4 may include an electrical connection member (or electrical connector) 412.

According to an embodiment, the electrical connection member 412 of the speaker unit 4 may be electrically connected to the speaker core 630. A connector may be disposed at one end portion 4122 of the electrical connection member 412. The connector may be electrically connected to another electrical component of the exemplary electronic device 2, such as a printed circuit board (not separately illustrated) that is at least partially positioned between the display module 201 and the rear surface portion 23 of the frame 22. A processor (e.g., the processor 120 of FIG. 1) that provides an electrical signal to the speaker core 630 may be disposed on the printed circuit board.

According to an embodiment, the electrical connection member 412 may include a flexible printed circuit board.

According to an embodiment, the speaker housing 42 may at least partially provide (or form) the exterior of the speaker unit 4.

According to an embodiment, the speaker housing 42 may be disposed on or coupled to the frame 22. According to an embodiment, the speaker housing 42 may be coupled to the frame 22 through mechanical fastening such as screw fastening (not separately illustrated).

According to an embodiment, the speaker core 630 may be accommodated in the speaker housing 42. The speaker core 630 may be a component that converts an electrical signal applied to a sound-generating body (e.g., a diaphragm 631, a coil 633, and a magnet 632 described below) into a sound signal. According to an embodiment, the diaphragm 631 of the speaker core 630 may be oriented toward a rear surface 42B of the speaker housing 42. In various embodiments, the diaphragm 631 of the speaker core 630 may be oriented to face a first plate 620 described below.

According to an embodiment, the electrical connection member 412 may penetrate the speaker housing 42. One terminal end portion 4122 of the electrical connection member 412, which includes the connector, may be positioned outside the speaker housing 42. The speaker housing 42 may include a through-hole (not separately illustrated) that allows the electrical connection member 412 to penetrate and be positioned therein.

According to an embodiment, the speaker housing 42 may include a first housing 421 and a second housing 422. The speaker housing 42 may have an inner space through the combination of a first housing 421 and a second housing 422. The first housing 421 and the second housing 422 may be coupled to each other through, for example, screw fastening (not separately illustrated). The first housing 421 and the second housing 422 may be coupled to each other through, for example, an adhesive material (or bonding material) (not separately illustrated).

According to an embodiment, the speaker housing 42 may include a front surface 42A and a rear surface 42B. The front surface 42A and/or the rear surface 42B of the speaker housing 42 may be provided (or formed) by the combination of the first housing 421 and the second housing 422. The front surface 42A and/or the rear surface 42B of the speaker housing 42 may include, for example, a combination of surface areas having different heights.

According to an embodiment, the front surface 42A of the speaker housing 42 may be substantially oriented toward the front surface plate 21. The rear surface 42B of the speaker housing 42 may be substantially oriented toward the rear surface portion 23 of the frame 22.

According to an embodiment, the first housing 421 of the speaker housing 42 may provide (or form) a greater portion of the front surface 42A of the speaker housing 42 than the second housing 422 of the speaker housing 42.

According to an embodiment, the second housing 422 of the speaker housing 42 may provide (or form) a greater portion of the rear surface 42B of the speaker housing 42 than the first housing 421 of the speaker housing 42.

According to an embodiment, the first housing 421 and/or the second housing 422 of the speaker housing 42 may include a non-metallic material (e.g., a polymer and/or fiber-reinforced polymer).

According to various embodiments, the first housing 421 and/or the second housing 422 may be provided (or formed) by a combination of at least one non-conductive portion (not separately illustrated) of a non-metallic material and at least one conductive portion (not separately illustrated) of a metallic material.

According to an embodiment, the speaker housing 42 may include a sound output hole (or sound emission hole) 424. The sound generated by the speaker core 630 may be output to the outside of the speaker housing 42 through the sound output hole 424. The sound output hole 424 may be provided (or formed), for example, on a side surface of the speaker housing 42 (e.g., a side surface connecting the front surface 42A and the rear surface 42B). The sound output hole 424 of the speaker housing 42 may be disposed corresponding to a first speaker hole SP1 of the frame 22 and may be connected to the first speaker hole SP1. The sound generated by the speaker core 630 may be output to the outside of the second exemplary electronic device 2 through the sound output hole 424 and the first speaker hole SP1.

According to an embodiment, the sound output hole 424 may be formed in the second housing 422 of the speaker housing 42. Although not separately illustrated, the sound output hole 424 may be formed in the first housing 421 of the speaker housing 42. Although not separately illustrated, the sound output hole 424 may be provided (or formed) by a combination of the first housing 421 and the second housing 422 of the speaker housing 42.

According to an embodiment, the speaker housing 42 may include a sound duct 423 extending from the sound output hole 424 to the speaker core 630. The sound duct 423 may include a passage that guides the sound generated from the speaker core 630 to the sound output hole 424 of the speaker housing 42. The sound duct 423 may be provided (or formed), at least in part, by a combination of the second housing 422 and the first plate 620. The sound generated from the speaker core 630 by vibrating the diaphragm 631 may be guided by the sound duct 423 and output to the outside of the second exemplary electronic device 2 through the sound output hole 424 of the speaker housing 42 and the first speaker hole SP1 of the frame 22.

According to an embodiment, the speaker housing 42 may include an opening (not separately illustrated) between the first plate 620 and the speaker core 630. The opening may contribute to slimming by reducing the thickness of the speaker unit 4. According to an embodiment, the first plate 620 may cover an opening (not separately illustrated) of the speaker housing 42. The first plate 620 may reduce or prevent sound generated from the speaker core 630 from leaking out of the speaker housing 42 through the opening. The first plate 620 may reduce or prevent external foreign substances such as dust or moisture from entering the internal space of the speaker housing 42 through the opening. According to various embodiments, the opening may be omitted.

According to an embodiment, the first plate 620 may be disposed on or coupled to the speaker housing 42. The first plate 620 may be coupled to the speaker housing 42, for example, through an adhesive (or bonding) material. The first plate 620 may be coupled to the speaker housing 42, for example, through mechanical fastening such as screw coupling (not separately illustrated).

According to an embodiment, the first plate 620 may be disposed on or coupled to the rear surface 42B of the speaker housing 42. The first plate 620 may be disposed on or coupled to, for example, the second housing 422.

According to an embodiment, the speaker housing 42 may include a second recess (not separately illustrated) in which the first plate 620 is disposed. The second recess may be provided (or formed) in a shape that allows the first plate 620 to be fitted therein so as to allow the first plate 620 to be stably disposed in the speaker housing 42. The second recess may contribute to slimming of the speaker unit 4 by reducing its thickness.

According to an embodiment, the speaker housing 42 may be indirectly in contact with the frame 22 via a buffer member 57 disposed between the first plate 620 and the rear portion 23 of the frame 22. The buffer member 57 may include a shock-absorbing material, such as sponge, foamed polymer, and/or foamed rubber. The buffer member 57 may reduce and/or prevent noise (such as rattling and/or vibration noise) generated by contact or collision between the first plate 620 and the frame 22 due to vibrations transmitted from the speaker core 630.

According to an embodiment, the speaker unit 4 may have an internal space in which the speaker core 630 is disposed. The internal space may be provided (or formed), for example, by a combination of the first plate 620 and the second housing 422. The first internal space 801 may be connected to the sound duct 423 (e.g., a passage). Due to vibrations of the diaphragm 631, the sound generated from the speaker core 630 may travel from the internal space of the speaker housing 42 to the sound duct 423 and may be output to the outside of the second exemplary electronic device 2 through the sound output hole 424 of the speaker housing 42 and the first speaker hole SP1 of the frame 22. Portions of the first internal space 801 other than the portion that is connected to the sound duct 423 may be sealed so as to substantially prevent sound leakage. In various embodiments, the first plate 620 may be disposed to at least partially overlap the speaker core 630.

In various embodiments, the first plate 620 may include a rigidity reinforcement portion 621. Various embodiments of the rigidity reinforcement portion 621 will be described later. In various embodiments, the buffer member 57 may be disposed on or over the rigidity reinforcement portion 621.

According to an embodiment, the first plate 620 may reduce or prevent electromagnetic interference (EMI) with respect to the speaker core 630. The first plate 620 may reduce or prevent magnetic force from the speaker core 630 from being transmitted or moved to the outside of the speaker unit 4. The first plate 620 may include an electromagnetic shielding material or an electromagnetic absorbing material. According to an embodiment, the first plate 620 may include various metal materials capable of shielding magnetic force. The first plate 620 may include a magnetic material such as iron, nickel, or cobalt. For example, the first plate 620 may include cold rolled steel or stainless steel (e.g., martensitic or ferritic stainless steel).

According to an embodiment, the first plate 620 may reduce or prevent magnetic force from the speaker core 630 from being transmitted or moved to the outside of the speaker unit 4. According to an embodiment, the first plate 620 may reduce or prevent electromagnetic interference (EMI) with respect to the speaker core 630. The first plate 620 may reduce or prevent magnetic force from the speaker core 630 from being transmitted or moved to the outside of the speaker unit 4. The first plate 620 may include an electromagnetic shielding material or an electromagnetic absorbing material.

According to an embodiment, the first plate 620 may reduce or prevent electromagnetic influence (e.g., electromagnetic interference (EMI)) from the speaker core 630 on the display module 201. The first plate 620 may reduce or prevent performance degradation of the display module 201 caused by the speaker core 630. The first plate 620 may reduce or prevent magnetic force from the speaker core 630 from being transmitted or moved to the display module 201.

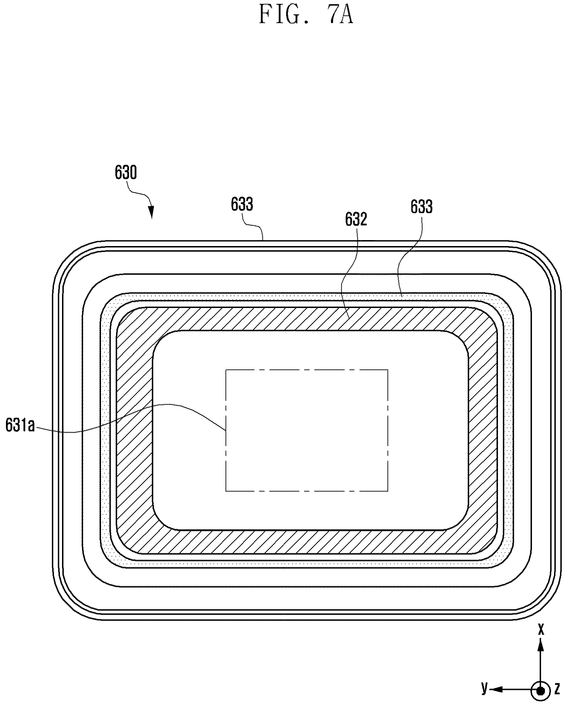

FIG. 7A is a plan view illustrating a speaker core 630 according to various embodiments of the disclosure.

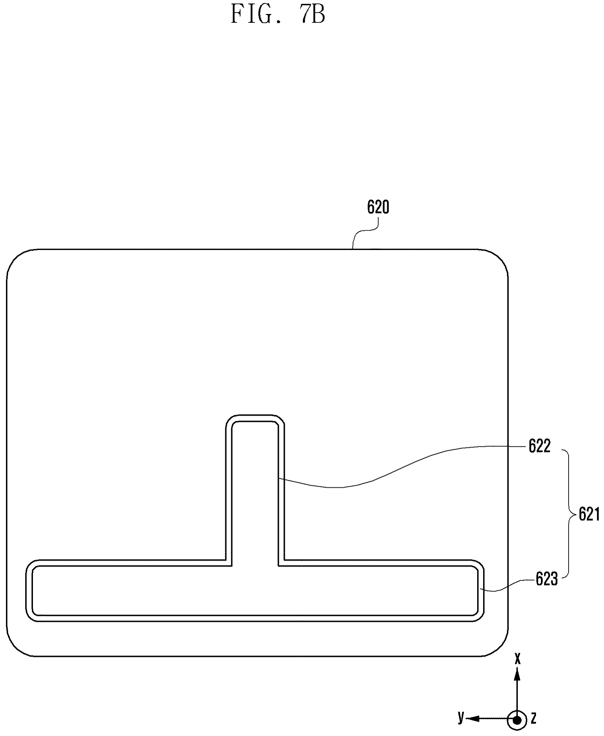

FIG. 7B is a plan view illustrating a first plate 620 according to various embodiments of the disclosure.

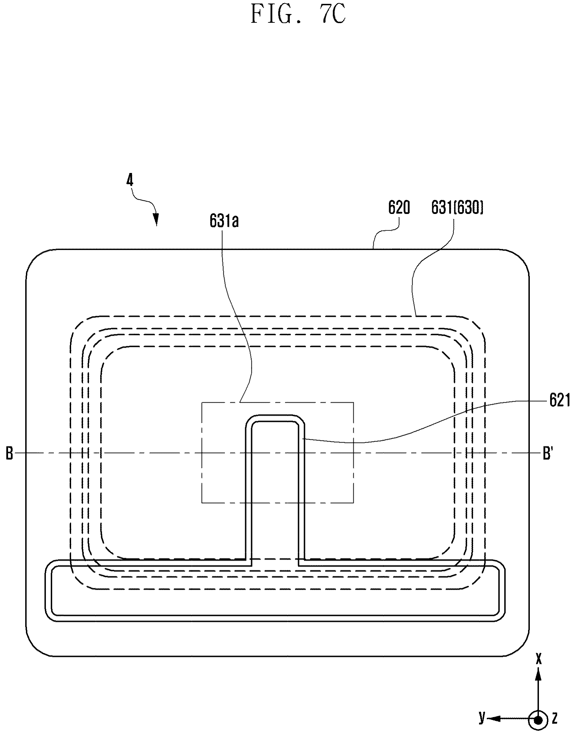

FIG. 7C is a plan view illustrating the first plate 620 and the speaker core 630 according to various embodiments of the disclosure.

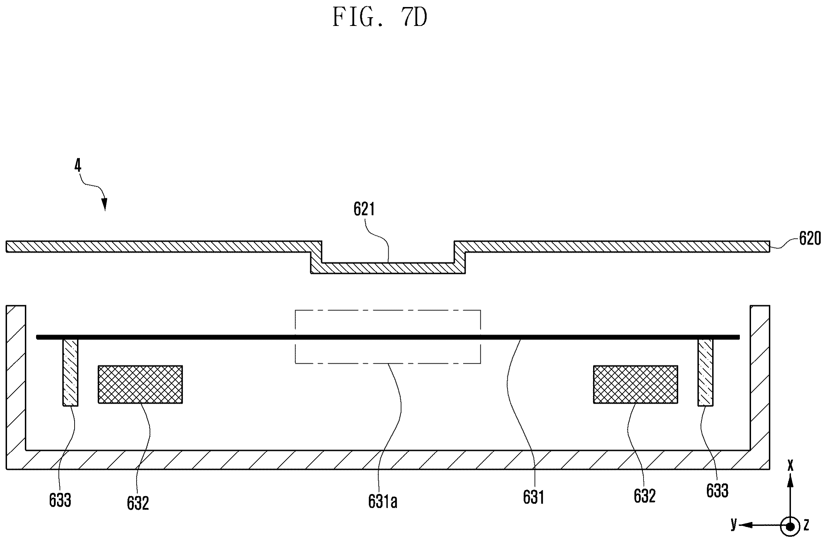

FIG. 7D is a schematic view illustrating a speaker unit 4 according to various embodiments of the disclosure.

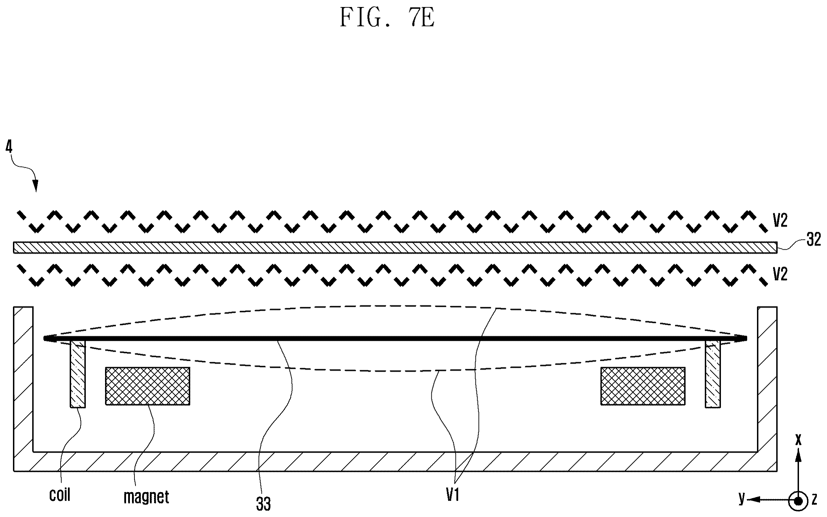

FIG. 7E is a schematic view illustrating a speaker unit 4 according to a comparative example.

A cross-sectional view of FIG. 7D is a sectional view taken along the B-B' direction of FIG. 7C.

Referring to FIGS. 7A to 7D, the speaker unit 4 may include a first plate 620 and a speaker core 630. The speaker core 630 may be a device that includes a sound-generating element, such as a magnet 632, a coil 633, and a diaphragm 631, and converts electrical signals into sound. The magnet 632 and the coil 633 may be members that generate electromagnetic driving force for sound output based on electrical signals, and the diaphragm 631 may be a member that vibrates according to the electromagnetic driving force in conjunction with the movement of at least one of the coil 633 or the magnet 632 to generate sound. In various embodiments, the diaphragm 631 may include various materials such as a thin metal plate, a synthetic resin film, rubber, pulp, carbon fiber, and/or graphene. In an embodiment, the diaphragm 631 may vibrate in a first direction (e.g., the +z-axis direction) and/or in a direction opposite to the first direction (e.g., the -z-axis direction).

In various embodiments, the first plate 620 may be a member that provides physical protection for the speaker core 630 and/or EMI shielding for the speaker core 630. The first plate 620 may be disposed to at least partially overlap the diaphragm 631 in the vibration direction of the diaphragm 631 (e.g., when viewed in the first direction (the +z-axis direction)) and to face the diaphragm 631 in a manner substantially parallel thereto. In an embodiment, the first plate 620 may be spaced apart from the diaphragm 631 in the vibration direction of the diaphragm 631 (e.g., the first direction (the +z-axis direction)).

In various embodiments, the first plate 620 may include a rigidity reinforcement portion 621. The rigidity reinforcement portion 621 may be a portion protruding from a surface of the first plate 620 and configured to reinforce the bending rigidity of the first plate 620. By reinforcing the bending rigidity of the first plate 620 by the rigidity reinforcement 621, resonance of the first plate 620 caused by a vibration mode such as bending of the first plate 620 may be reduced. The rigidity reinforcement portion 621 may be formed by various sheet metal processing methods such as bending, pressing, or stamping.

Referring to FIG. 7E, in a speaker unit 3 according to a comparative example in which a shielding plate 32 does not include a rigidity reinforcement portion, the shielding plate 32 may resonate (V2) due to vibration (V1) of a diaphragm 33. In the speaker unit 3 of the comparative example, not only may the sound of the speaker be distorted in a certain frequency band due to the resonance (V2) of the shielding plate 32, but also the vibration of the shielding plate 32 may be transmitted to other components of the electronic device, generating noise.

In contrast, referring to FIG. 7D, in the speaker unit 4 according to an embodiment of the disclosure, the resonance of the first plate 620 may be reduced because the first plate 620 has a rigidity reinforcement portion 621. Therefore, distortion of the speaker sound and the generation of noise due to resonance may be reduced.

In various embodiments, the rigidity reinforcement portion 621 may be positioned to reinforce the rigidity of an area of the first plate 620 that overlaps a central portion 631a of the diaphragm 631. For example, the rigidity reinforcement portion 621 may be positioned to at least partially overlap the central portion 631a of the diaphragm 631. Since the vibration of the diaphragm 631 generally has the greatest magnitude at the central portion 631a of the diaphragm 631, reinforcing the area of the first plate 620 that overlaps the central portion 631a of the diaphragm 631 may effectively reduce resonance caused by vibration in that area.

Referring to FIGS. 7B and 7C, the rigidity reinforcement portion 621 of the first plate 620 may include a first rigidity reinforcement portion 622 and a second rigidity reinforcement portion 623. The first rigidity reinforcement portion 622 may be positioned relatively at a central portion on a surface of the first plate 620, and the second rigidity reinforcement portion 623 may be a member positioned relatively at a peripheral portion. In various embodiments, the first rigidity reinforcement portion 622 may reinforce an area of the first plate 620 corresponding to a central portion 631a of the diaphragm 631. For example, the first rigidity reinforcement portion 622 may be positioned to at least partially overlap the central portion 631a of the diaphragm 631. Accordingly, the first rigidity reinforcement portion 622 may effectively reduce resonance of the first plate 620 caused by strong vibration of the central portion 631a of the diaphragm 631.

In various embodiments, the second rigidity reinforcement portion 623 may be positioned at an edge of the diaphragm 631. By being positioned at the edge of the diaphragm 631, the second rigidity reinforcement portion 623 may reinforce the overall structural robustness of the diaphragm 631 and improve the high-frequency response of the speaker unit 4 by reducing resonance in the high-frequency band.

In various embodiments, the first rigidity reinforcement portion 622 and the second rigidity reinforcement portion 623 may extend in different directions on a surface of the first plate 620. For example, the first rigidity reinforcement portion 622 and the second rigidity reinforcement portion 623 may have linear shapes that are perpendicular to each other. By being oriented in different directions, the first rigidity reinforcement portion 622 and the second rigidity reinforcement portion 623 may reinforce the first plate 620 against bending moments in two or more directions. Accordingly, resonance in various modes may be effectively reduced.

In various embodiments, the first rigidity reinforcement portion 622 and the second rigidity reinforcement portion 623 may be connected to each other. For example, the first rigidity reinforcement portion 622 and the second rigidity reinforcement portion 623 may be formed in a T-shape on a surface of the first plate 620. In various embodiments, the first rigidity reinforcement portion 622 may extend from an area overlapping the central portion 631a of the diaphragm 631 and be connected to the second rigidity reinforcement portion 623. As a result, bending moments caused by resonance of the first plate 620 occurring at the area where the vibration amplitude of the diaphragm 631 is greatest may be effectively distributed not only to the first rigidity reinforcement portion 622 but also to the area reinforced by the second rigidity reinforcement portion 623, thereby effectively reducing the resonance of the first plate 620. In addition, since the first rigidity reinforcement portion 622 and the second rigidity reinforcement portion 623, which are connected to each other, may be shaped on the first plate 620 through a single process (e.g., press working and/or stamping), the manufacturing process and cost of the first plate 620 may be reduced compared to separately shaping the first rigidity reinforcement portion 622 and the second rigidity reinforcement portion 623.

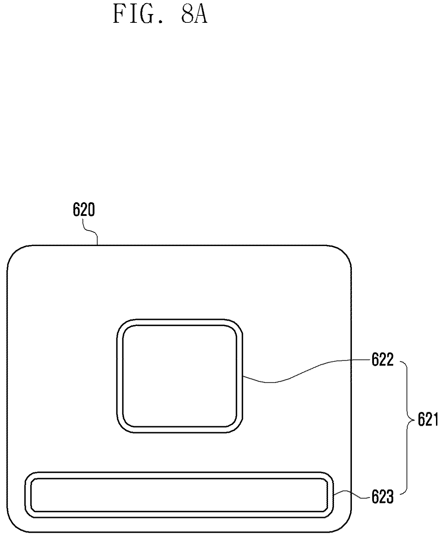

FIGS. 8A to 8F are plan views illustrating the first plate 620 according to various embodiments.

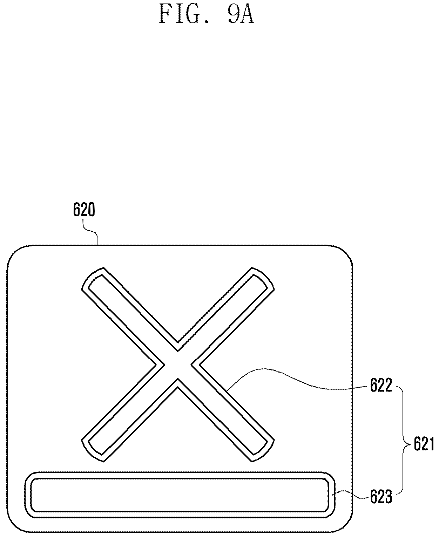

FIGS. 9A to 9D are plan views illustrating the first plate 620 according to various embodiments.

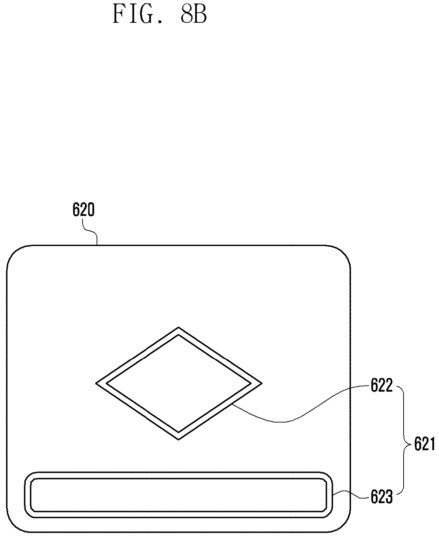

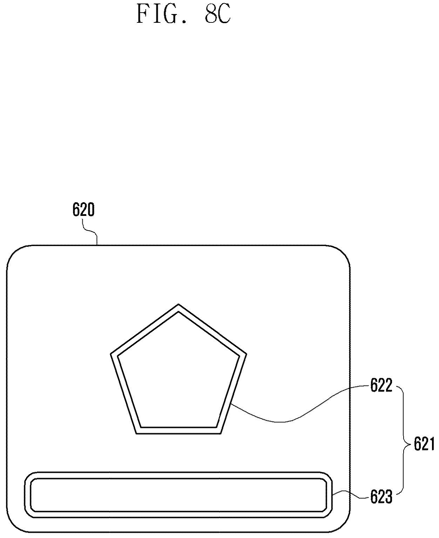

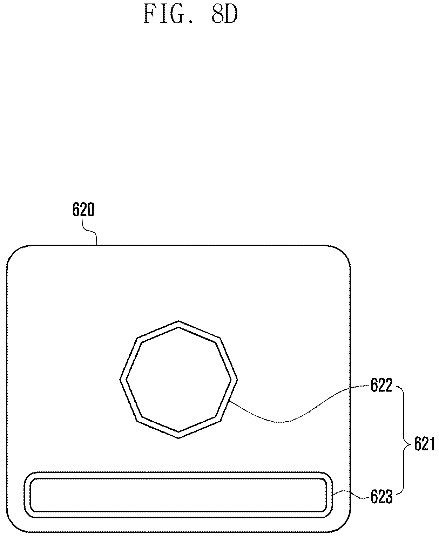

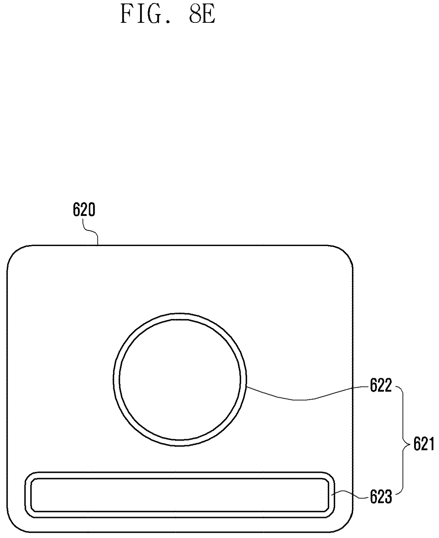

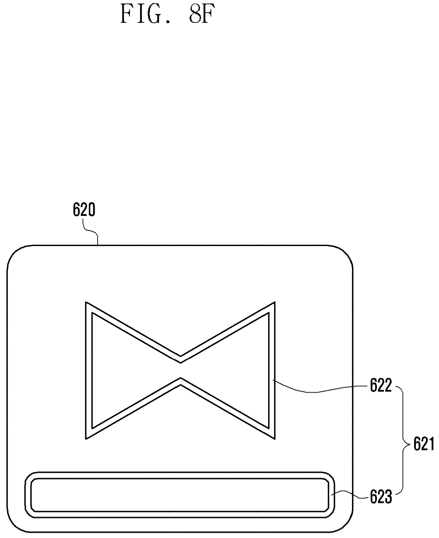

Referring to FIGS. 8A to 8F, in various embodiments, the first rigidity reinforcement portion 622 of the first plate 620 may have a circular or polygonal shape. For example, the first rigidity reinforcement portion 622 may have a rectangular shape, as illustrated in FIG. 8A or 8B, or a pentagonal to octagonal shape, as illustrated in FIG. 8C or 8D. In addition, the first rigidity reinforcement portion 622 may have a circular shape, as illustrated in FIG. 8E or various other closed-curve, or polygonal shapes, as illustrated in FIG. 8F.

In various embodiments, the closed-curve-shaped first rigidity reinforcement portion 622 may be disposed to at least partially overlap the central portion 631a of the diaphragm 631, as described with reference to FIGS. 7A to 7D. The closed-curve shape may be formed through a relatively simple process and machining method and may reinforce rigidity over a wide area of the first plate 620.

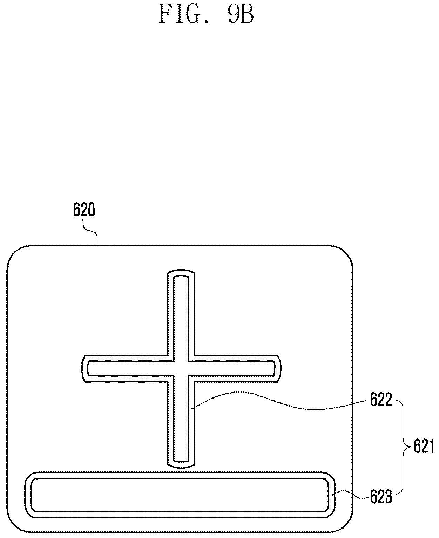

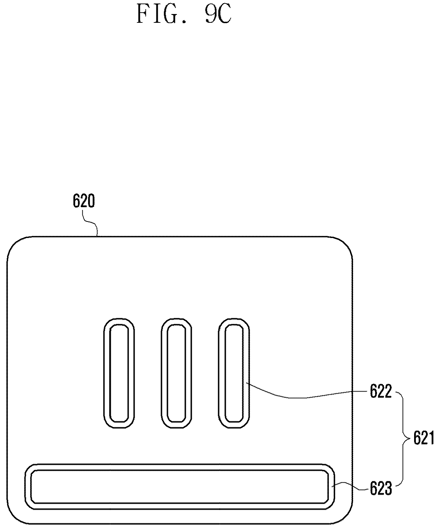

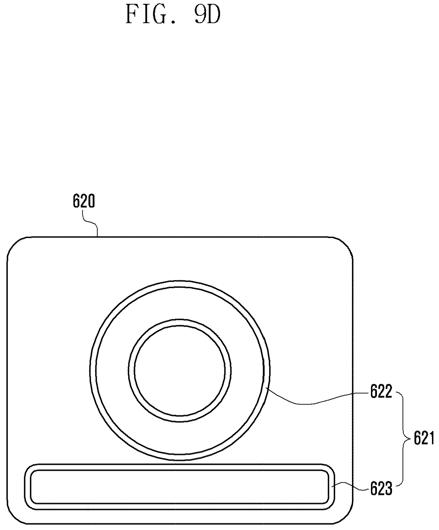

Referring to FIGS. 9A to 9D, in various embodiments, the first rigidity reinforcement portion 622 of the first plate 620 may have a shape formed of a plurality of straight or curved lines. For example, the first rigidity reinforcement portion 622 may have an intersecting shape (e.g., an X-shape or a cross shape) formed by a plurality of straight lines oriented in different directions, as illustrated in FIGS. 9A and 9B, a shape formed by a plurality of straight lines oriented in parallel with each other, as illustrated in FIG. 9C, or a curved shape (e.g., a donut shape), as illustrated in FIG. 9D. The first rigidity reinforcement portion 622 having a plurality of straight lines oriented in different directions, as illustrated in FIGS. 9A and 9B, may reinforce the first plate 620 against bending moments in different directions, thereby effectively reducing various resonance modes that may occur in the first plate 620. In addition, the first rigidity reinforcement portion 622 having a circular or elliptical shape, as illustrated in FIG. 9D, may effectively reinforce the rigidity in all directions in the plane, contributing to the reduction of resonance.

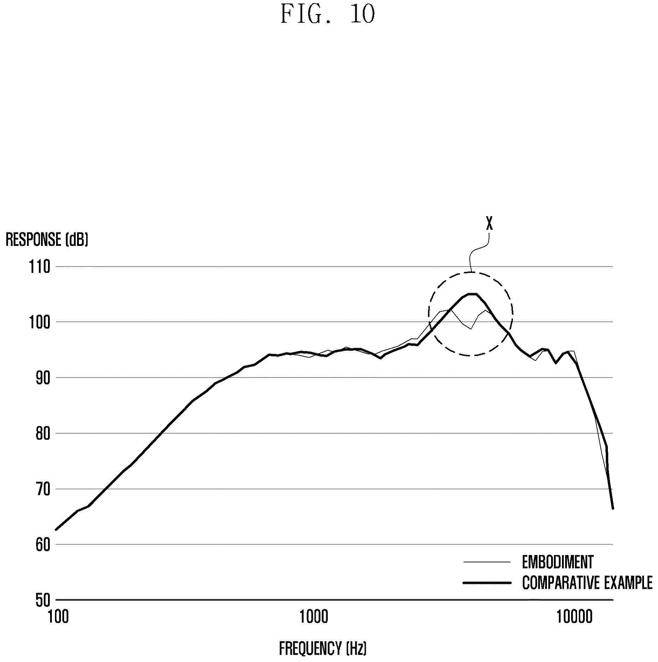

FIG. 10 is a graph illustrating the frequency response in an audible frequency range of a speaker unit 4 according to an embodiment of the disclosure and a speaker unit according to a comparative example.

In FIG. 10, the comparative example refers to a speaker unit in which the shielding plate does not include a rigidity reinforcement portion (e.g., the speaker unit 3 of FIG. 7E).

Referring to FIG. 10, in the speaker unit 3 of the comparative example, it may be observed that the shielding plate causes resonance at a specific frequency, resulting in a drop (dip) in the frequency response of the speaker unit 3 in a specific band (e.g., the portion marked with X in FIG. 10). This drop in response may cause distortion in the sound generated by the speaker. In contrast, in the speaker unit 4 according to the embodiment of the disclosure, it may be observed that the drop in the frequency response in the same band is reduced or prevented. This may result from the rigidity reinforcement portion 621 of the first plate 620 reducing or preventing resonance of the first plate 620.

According to various embodiments of the disclosure, an electronic device (e.g., the electronic device 101 of FIG. 1) is an electronic device including a speaker unit 200, and the speaker unit 200 may include a speaker core 230 including a diaphragm 631 configured to generate sound by vibrating in a first direction, and a speaker housing 210 including an internal space in which the speaker core 230 is positioned, and a first plate 220 positioned in the first direction. The first plate 220 may include a rigidity reinforcement portion 221 protruding from a surface of the first plate 220.

In various embodiments, the rigidity reinforcement portion 221 may be formed by bending the first plate 220.

In various embodiments, the rigidity reinforcement portion 221 may be positioned to at least partially overlap a central portion 231a of the diaphragm 231 in the first direction.

In various embodiments, the rigidity reinforcement portion 221 may include a first rigidity reinforcement portion 222 and a second rigidity reinforcement portion 223. The first rigidity reinforcement portion 222 may be positioned at a relatively central portion of the first plate 220, and the second rigidity reinforcement portion 223 may be positioned at a relatively peripheral portion of the first plate 220.

In various embodiments, the speaker core 230 may include a diaphragm 231, and the first rigidity reinforcement portion 222 may be positioned to at least partially overlap a central portion 231a of the diaphragm 231.

In various embodiments, the first rigidity reinforcement portion 222 may be formed in at least one linear shape on a surface of the first plate 220.

In various embodiments, the first rigidity reinforcement portion 222 may be formed to have a plurality of the linear shapes extending in respective different directions on a surface of the first plate 220.

In various embodiments, the second rigidity reinforcement portion 223 may be formed in a linear shape, and the first rigidity reinforcement portion 222 may be formed in a linear shape extending in a different direction from the second rigidity reinforcement portion 223 on a surface of the first plate 220.

In various embodiments, the first rigidity reinforcement portion 222 and the second rigidity reinforcement portion 223 may be connected to each other on a surface of the first plate 220.

In various embodiments, the first rigidity reinforcement portion 222 may have a polygonal shape or a circular shape.

According to various embodiments of the disclosure, the speaker unit 200 is a speaker unit 200 for an electronic device, and may include a speaker core 230 disposed to emit sound in a first direction, and a speaker housing 210 including an internal space in which the speaker core 230 is positioned, and a first plate 220 positioned in the first direction. The first plate 220 may include a rigidity reinforcement portion 221 protruding from a surface of the first plate 220.

In various embodiments, the rigidity reinforcement portion 221 may be formed by bending the first plate 220.

In various embodiments, the speaker core 230 may include a diaphragm 231, and the rigidity reinforcement portion 221 may be positioned to at least partially overlap a central portion 231a of the diaphragm 231.

In various embodiments, the rigidity reinforcement portion 221 may include a first rigidity reinforcement portion 222 and a second rigidity reinforcement portion 223. The first rigidity reinforcement portion 222 may be positioned at a relatively central portion of the first plate 220, and the second rigidity reinforcement portion 223 may be positioned at a relatively peripheral portion of the first plate 220.

In various embodiments, the speaker core 230 may include a diaphragm 231, and the first rigidity reinforcement portion 222 may be positioned to at least partially overlap a central portion 231a of the diaphragm 231.

In various embodiments, the first rigidity reinforcement portion 222 may be formed in at least one linear shape on a surface of the first plate 220.

In various embodiments, the first rigidity reinforcement portion 222 may be formed to have a plurality of the linear shapes extending in respective different directions on a surface of the first plate 220.

In various embodiments, the second rigidity reinforcement portion 223 may be formed in a linear shape, and the first rigidity reinforcement portion 222 may be formed in a linear shape extending in a different direction from the second rigidity reinforcement portion 223 on a surface of the first plate 220.

In various embodiments, the first rigidity reinforcement portion 222 and the second rigidity reinforcement portion 223 may be connected to each other on a surface of the first plate 220.

In various embodiments, the first rigidity reinforcement portion 222 may have a polygonal shape or a circular shape.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. Therefore, the scope of various embodiments of the disclosure should be construed to include, in addition to the embodiments set forth herein, all changes and modifications derived based on the technical idea of various embodiments of the disclosure.

## Claims

1. An electronic device with a speaker unit, the speaker unit comprising:
a speaker core comprising a diaphragm configured to generate sound by vibrating in a first direction; and
a speaker housing having an internal space in which the speaker core is positioned, and a first plate positioned in the first direction,
wherein the first plate comprises a rigidity reinforcement portion protruding from a surface of the first plate.

2. The electronic device of claim 1, wherein the rigidity reinforcement portion is formed by bending the first plate.

3. The electronic device of claim 1, wherein the rigidity reinforcement portion is positioned to at least partially overlap a central portion of the diaphragm in the first direction.

4. The electronic device of claim 1, wherein the rigidity reinforcement portion comprises a first rigidity reinforcement portion and a second rigidity reinforcement portion,
wherein the first rigidity reinforcement portion is positioned at a relatively central portion of the first plate, and
wherein the second rigidity reinforcement portion is positioned at a relatively peripheral portion of the first plate.

5. The electronic device of claim 4, wherein the speaker core comprises the diaphragm, and
wherein the first rigidity reinforcement portion is positioned to at least partially overlap a central portion of the diaphragm.

6. The electronic device of claim 4, wherein the first rigidity reinforcement portion is formed in a plurality of linear shapes extending in respective different directions on a surface of the first plate.

7. The electronic device of claim 4, wherein the second rigidity reinforcement portion is formed in a linear shape, and
wherein the first rigidity reinforcement portion is formed in a linear shape extending in a different direction from the second rigidity reinforcement portion on a surface of the first plate.

8. The electronic device of claim 4, wherein the first rigidity reinforcement portion and the second rigidity reinforcement portion are connected to each other on a surface of the first plate.

9. The electronic device of claim 4, wherein the first rigidity reinforcement portion has a polygonal shape or a circular shape.

10. A speaker unit for an electronic device, the speaker unit comprising:
a speaker core disposed to emit sound in a first direction; and
a speaker housing comprising an internal space in which the speaker core is positioned, and a first plate positioned in the first direction,
wherein the first plate comprises a rigidity reinforcement portion protruding from a surface of the first plate.

11. The speaker unit of claim 10, wherein the rigidity reinforcement portion is formed by bending the first plate.

12. The speaker unit of claim 10, wherein the speaker core comprises the diaphragm, and
wherein the rigidity reinforcement portion is positioned to at least partially overlap a central portion of the diaphragm.

13. The speaker unit of claim 10, wherein the rigidity reinforcement portion comprises a first rigidity reinforcement portion and a second rigidity reinforcement portion,
wherein the first rigidity reinforcement portion is positioned at a relatively central portion of the first plate, and
wherein the second rigidity reinforcement portion is positioned at a relatively peripheral portion of the first plate.

14. The speaker unit of claim 14, wherein the first rigidity reinforcement portion is formed in a plurality of linear shapes extending in respective different directions on a surface of the first plate.

15. The speaker unit of claim 13, wherein the first rigidity reinforcement portion and the second rigidity reinforcement portion are connected to each other on a surface of the first plate.
